# EUROPÄISCHE PATENTANMELDUNG

(11) **EP 1 527 674 A1**
(43) Veröffentlichungstag der Anmeldung: **04.05.2005**
(21) Anmeldenummer: 04105293.7
(22) Anmeldetag: 26.10.2004
(51) Int. Cl.: A01F 15/07

(54) **Ballenpresse**

(30) Priorität: 30.10.2003 DE 10350622
(71) Anmelder: DEERE & COMPANY, Moline, Illinois 61265-8098 (US)
(72) Erfinder: Viaud, Jean, 70100, Gray (FR); Chapon, Emmanuel, 70100, Velet (FR)
(74) Vertreter: Magin, Ludwig

(57) **Zusammenfassung**

Es wird eine Vorrichtung (14) einer Ballenpresse (10), zum Umhüllen eines Ballens (16) mit einer Hüllbahn (18), mit Mitteln (24), welche die Hüllbahn (18) von einem Vorrat, beispielsweise in der Art einer Rolle (28) abziehen, vorgeschlagen, wobei die Vorrichtung (14) die Hüllbahn (18) derart an eine Pressgutzufuhreinrichtung (40) der Ballenpresse (10) heranbringen kann, dass diese durch ihn ergriffen und in Richtung des Ballens (16) gefördert wird.

## Beschreibung

Die Erfindung betrifft eine Ballenpresse mit einem Pressraum, einer Pressgutzufuhreinrichtung, welche Pressgut in den Pressraum hinein fördern kann, und einer Vorrichtung zum Umhüllen eines Ballens mit einer Hüllbahn, welche Mittel aufweist, die die Hüllbahn von einem Vorrat, beispielsweise in der Art einer Rolle, abziehen.

Die DE-C2-36 17 155 zeigt eine Rundballenpresse mit einer Einrichtung zum Umhüllen eines Ballens mit einer Hüllbahn, welche einen Zufuhrmechanismus aufweist, der die Hüllbahn zunächst vom einem Vorrat abzieht, um sie dann auf einen Niederhalter aufzulegen und an eine Starterwalze, welche die Hüllbahn ergreift und dem zu umhüllenden Ballen zuführt, heranzubringen.

Das der Erfindung zugrunde liegende Problem wird darin gesehen, dass eine derartige Ballenpresse mit einer Vorrichtung zum Umhüllen eines Ballens viele Einzelteile zum Heranführen der Hüllbahn an den Ballen aufweist und somit aufwändig in der Herstellung und Wartung ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird eine Ballenpresse mit einem Pressraum, einer Pressgutzufuhreinrichtung, welche Pressgut in den Pressraum hinein fördern kann, und einer Vorrichtung zum Umhüllen eines Ballens mit einer Hüllbahn, welche Mittel aufweist, die die Hüllbahn von einem Vorrat, beispielsweise in der Art einer Rolle abziehen, gezeigt, wobei die Vorrichtung die Hüllbahn derart an die Pressgutzufuhreinrichtung heranbringen kann, dass diese durch sie ergriffen und in Richtung des Ballens gefördert wird. Auf diese Weise kann auf Zufuhrmechanismen verzichtet werden, welche die Hüllbahn an den Ballen heranbringen, damit diese von dem Ballen ergriffen werden kann, da diese Funktion bereits zumindest im Wesentlichen durch die Pressgutzufuhreinrichtung erfüllt wird. Die Pressgutzufuhreinrichtung dient während der eigentlichen Ballenbildung der Pressgutzufuhr in den Pressraum der Ballenpresse. Während des Umhüllungsvorgangs hingegen fördert sie die Hüllbahn in Richtung des Ballens.

Bei der Pressgutzufuhreinrichtung handelt es sich vorzugsweise um einen in üblicher Weise ausgeführten Förderrotor, welcher mit Mitnehmern versehen ist, die zu pressendes Material in den Pressraum der Ballenpresse fördern. Die Pressgutzufuhreinrichtung kann aber auch als Bandförderer, Förderschnecke, Förderwalze oder in jeder anderen geeigneten Art ausgebildet sein.

Durch eine Leiteinrichtung, welche beispielsweise in der Art eines Kanals und/oder einer Leitfläche ausgebildet ist, die sich vorzugsweise zumindest im Wesentlichen von den Mitteln bis an die Pressgutzufuhreinrichtung erstreckt, kann die Zufuhr der Hüllbahn zu dem Ballen weiter verbessert werden, da einem Kontakt zwischen Pressgut und/oder insbesondere beweglichen Bauteilen der Ballenpresse und der Hüllbahn entgegengewirkt wird. Die Leiteinrichtung kann in der Art eines zumindest nach oben und unten zumindest im Wesentlichen geschlossenen Kanals aber auch als eine vorzugsweise unterhalb der Hüllbahn vorgesehene Leitfläche ausgebildet sein.

Die Leiteinrichtung kann insbesondere in Randbereichen der Hüllbahn angeordnet sein, wo sie eine Art Führung bildet. Vorzugsweise erstreckt sie sich aber zumindest im Wesentlichen über die gesamte Breite der Hüllbahn.

Wirkt die Vorrichtung mit einem Gebläse zusammen bzw. weist sie ein Gebläse auf, so kann vorgesehen sein, dass dieses einen Luftstrom erzeugt, welcher die Hüllbahn in Richtung der Fördereinrichtung fördert und/oder drängt.

Wirkt die Leiteinrichtung bzw. der Kanal oder die Leitfläche mit dem Gebläse zusammen, so wird der Luftstrom durch den Kanal gebündelt bzw. durch die Leitfläche gelenkt, wodurch eine gezielte Führung der Hüllbahn unterstützt wird. Darüber hinaus verhindert der Luftstrom, dass sich die Hüllbahn an den Kanal bzw. an eine Wandung des Kanals oder an die Leitfläche anlegt und dort haften bleibt, indem ein Luftpolster aufgebaut wird, auf welchem die Hüllbahn schwebt. Dies ist insbesondere dann günstig, wenn die Hüllbahn mit einem Klebstoff beschichtet ist oder adhäsive Eigenschaften aufweist. Es kann vorgehen sein, dass das Gebläse den Luftstrom zumindest im Wesentlichen über die gesamte Breite des Kanals, beispielsweise über einen Zufuhrschlitz o.ä., dem Kanal zuführt, wodurch sich eine gleichmäßige Verteilung ergibt. Es ist aber auch möglich, dass die Einleitung bereichsweise oder auch punktuell erfolgt, um bestimmte Bereiche der Hüllbahn, welche auch in besonderer Weise für einen Vortrieb durch eine Luftstrom ausgebildet sein können, beispielsweise geschlossen, während die übrige Hüllbahn durchbrochen ausgebildet ist, gezielt voranzutreiben bzw. von dem Kanal abzuheben.

Es kann vorgesehen sein, dass die Hüllbahn nach Beendigung des Hüllvorgangs abreißt, beispielsweise indem der Ballen weiterrotiert und die Zufuhr von Hüllbahn von dem Vorrat unterbrochen wird. Um einer ungleichmäßigen Abrisskante und somit einem Verknäulen der Hüllbahn entgegenzuwirken, kann eine Trenneinrichtung vorgesehen sein, welche beispielsweise ein Messer aufweist, welche die Hüllbahn schneidet oder abtrennt. Diese Trenneinrichtung kann mit der Leiteinrichtung in der Art zusammenwirken, dass diese als Unterlage oder Lagesicherung für die Hüllbahn dient.

Wirkt die Pressgutzufuhreinrichtung mit einer Schneideinrichtung zusammen, so wird das durch die Pressgutzufuhreinrichtung geförderte Pressgut durch die Schneideinrichtung weiter zerkleinert, wodurch ein gleichmäßigerer Ballen gebildet wird. Die Pressgutzufuhreinrichtung und die Schneideinrichtung sind vorzugsweise in einem Zufuhrkanal der Ballenpresse angeordnet, durch den das durch eine Aufnahmeeinrichtung aufgenommene Pressgut in einen Pressraum der Ballenpresse gelangt, in dem der Ballen gebildet und im Anschluss umhüllt wird.

Die Pressgutzufuhreinrichtung kann in einfacher Art und Weise an den den Ballen aufnehmenden Pressraum der Ballenpresse angrenzend vorgesehen sein; es ist aber auch denkbar, dass zwischen der Pressgutzufuhreinrichtung und dem Pressraum weitere Förderreinrichtungen, auch in der Art einer Starterwalze bzw. in der Art von Riemen etc. versehen sind, welche zur Ballenbildung beitragen oder auch von dieser unabhängig vorgesehen sein können.

Die Pressgutzufuhreinrichtung kann einer Aufnahmeeinrichtung der Ballenpresse nachgeordnet sein, welche zu pressendes Material beispielsweise vom Untergrund aufnimmt. Bei einer derartigen Aufnahmeeinrichtung kann es sich beispielsweise um eine konventionelle Pick-Up handeln. Es ist aber auch denkbar, dass diese in anderer Art und Weise, beispielsweise in der Art eines Förderbandes, ausgebildet ist.

Es ist möglich, dass die Hüllbahn rein aufgrund der Wirkung ihres Gewichts oder auch eines durch ein Gebläse erzeugten Luftstroms etc. an die Pressgutzufuhreinrichtung herangebracht wird, um den Hüllvorgang zu beginnen, und beispielsweise durch ein geeignetes Abtrennen oder -schneiden von der Pressgutzufuhreinrichtung getrennt wird, wenn der Hüllvorgang beendet ist bzw. werden soll. Es kann aber auch ein Leitmittel vorgesehen sein, welches die Hüllbahn selektiv an die Pressgutzufuhreinrichtung heranbringt. Das Leitmittel kann die Hüllbahn zu Beginn des Hüllvorgangs an die Pressgutzufuhreinrichtung heranbringen, so dass sie durch diesen ergriffen werden kann. Nach Abschluss des Hüllvorgangs bzw. um den Hüllvorgang zu beenden, entfernt das Leitmittel die Hüllbahn vom der Pressgutzufuhreinrichtung, so dass diese nicht länger von der Pressgutzufuhreinrichtung gefördert wird bzw. nicht länger oder nicht mehr von dieser ergriffen werden kann.

Das Leitmittel kann beispielsweise als eine Leitplatte ausgebildet sein, auf der die Hüllbahn aufliegt. Ist das Leitmittel allerdings rechenartig ausgeführt, so kann die Hüllbahn auf dem Leitmittel bzw. auf Zinken des Rechens aufliegen und durch diese an die Pressgutzufuhreinrichtung herangebracht bzw. von dieser entfernt werden; Schmutz und Verunreinigungen hingegen können zwischen den Zinken hindurchfallen, wodurch Anlagerungen an bzw. auf dem Leitmittel entgegengewirkt wird. Darüber hinaus bietet eine rechenartige oder allgemein abschnittsweise unterbrochene Ausführung des Leitmittels die Möglichkeit, dass die noch auf dem Leitmittel aufliegende Hüllbahn durch die Pressgutzufuhreinrichtung ergriffen wird, wodurch eine gute Förderung insbesondere zu Beginn des Hüllvorgangs begünstigt wird.

Ist die Pressgutzufuhreinrichtung in einem Zufuhrkanal, welcher sich zwischen der Aufnahmeeinrichtung zu der Presskammer erstreckt, und durch den aufgenommenes Material durch die Pressgutzufuhreinrichtung in dem Presskammer gefördert wird, angeordnet, so kann das Leitmittel an einem der Presskammer zugewandten Endbereich des Zufuhrkanals vorgesehen bzw. mit diesem direkt oder indirekt verbunden sein.

Das Leitmittel kann allgemein beweglich vorgesehen sein, um die Hüllbahn zumindest in eine erste, von der Pressgutzufuhreinrichtung beabstandete Stellung, und in eine zweite Stellung zu bringen, in welcher das Leitmittel an die Pressgutzufuhreinrichtung angrenzt oder auch insbesondere bei einer rechnartigen Ausführung in diese eingreift. Einfach und wartungsfreundlich ist es aber, wenn das Leitmittel schwenkbar vorgesehen ist. Um das Leitmittel zu verschwenken, kann dieses mit einem Motor, beispielsweise in der Art eines Elektro- oder Hydraulikmotors direkt oder auch indirekt, beispielsweise über Hebel etc., verbunden sein.

Die Pressgutzufuhreinrichtung bzw. der Förderrotor kann oberschlächtig oder auch unterschlächtig fördern. Bei einer oberschlächtigen Förderung erfolgt die Zufuhr der Hüllbahn vorzugsweise von oben. Bei einer unterschlächtigen Förderung ist eine Zufuhr von unten günstig, wobei die Hüllbahn durch das Leitmittel von unten an die Pressgutzufuhreinrichtung herangebracht werden kann, so dass sie durch diesen ergriffen und der Presskammer zugeführt wird.

Eine Vorrichtung zum Umhüllen eines Ballens kann in der Industrie an Ballenpressen Verwendung finden, welche Ballen aus Papier, Abfällen, textilen Materialien etc. bilden. Besonders geeignet ist eine solche Vorrichtung aber zur Verwendung an einer landwirtschaftlichen Ballenpresse für Ballen aus landwirtschaftlichen Erntegütern, die üblicherweise an ein Zugfahrzeug angehängt sind, und insbesondere an Rundballenpressen, da diese einfach im Aufbau und sicher in der Funktion sein müssen, um im Ernteeinsatz zu bestehen.

In der Zeichnung wird nachfolgend ein Ausführungsbeispiel der vorliegenden Erfindung dargestellt.

Die einzige Figur zeigt eine schematische Darstellung einer Ballenpresse mit einer Vorrichtung zum Umhüllens eines Ballens mit einer Hüllbahn.

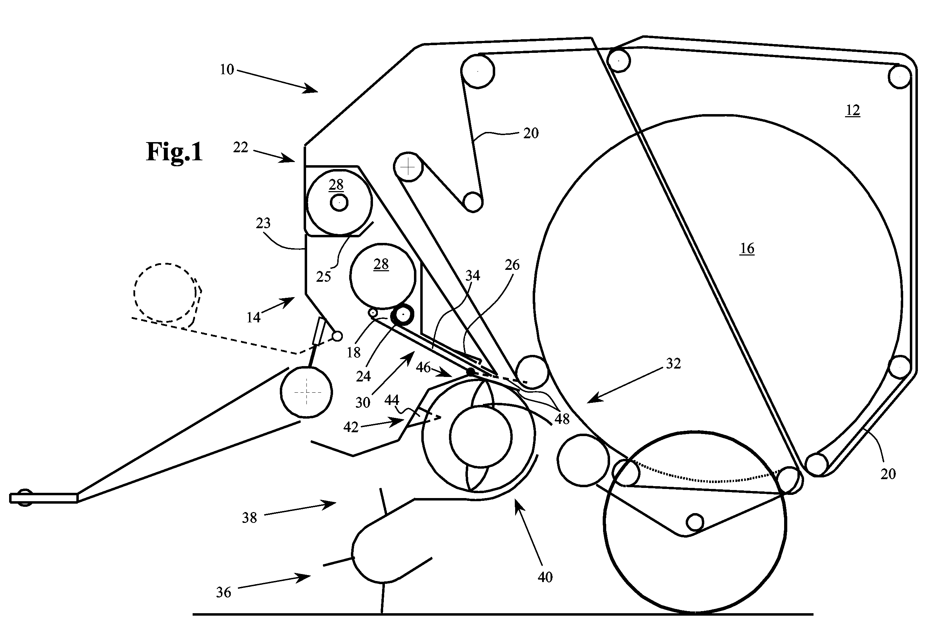

Figur 1 zeigt eine Ballenpresse 10 von im Wesentlichen herkömmlicher Bauart mit einem Pressraum 12. Entsprechend den vorliegenden Ausführungsbeispielen ist darüber hinaus eine Vorrichtung 14 zum Umwickeln eines in dem Pressraum 12 gebildeten Ballens 16 mit einer Hüllbahn 18 vorgesehen.

Bei der Ballenpresse 10 kann es sich um eine bekannte Bauart handeln, d.h. mit einem Pressraum 12 konstanter oder variabler Größe, der von Walzen, von Ketten oder einer Kombination von Riemen und Ketten oder wie in dem Ausführungsbeispiel von Riemen 20 umgeben ist.

Eine derartige Ballenpresse 10 kann in der Landwirtschaft zum Bilden von Ballen 16 aus Erntegut, wie z.B. Stroh, Heu oder Gras eingesetzt werden. Es ist aber auch eine Verwendung in industriellen Bereichen denkbar.

Die Vorrichtung 14 ist in der vorliegenden Ausführungsform an der Vorderseite der Ballenpresse 10 vorgesehen. Die Hüllbahn 18 wird durch einen Spalt zwischen zwei benachbarten Riemen 20 hindurch dem Pressraum 12 zugeführt, wo sie von dem in Drehung versetzten Ballen 16 mitgenommen wird. Die Vorrichtung 14 kann aber auch in einem mittleren Bereich der Ballenpresse 10 oder auch vor oder oberhalb des Pressraums 12 angeordnet sein.

Mittels der Hüllbahn 18 wird der Ballen 16 gebunden und somit daran gehindert, nach einem Verlassen der Ballenpresse 10 auseinanderzufallen. Bei der Hüllbahn 18 kann es sich um Folie, Netz, Gewebe, Papier oder dergleichen handeln.

Die Vorrichtung 14 weist ein Gehäuse 22, Mittel 24, welche die Hüllbahn 18 dem Ballen 16 zuführen bzw. ein beispielsweise als Vortriebswalze ausgebildetes Vortriebselement und eine Trenneinrichtung 26 auf. In dem Gehäuse 22 ist die Hüllbahn 18 als Rolle 28 bzw. Vorrat gelagert. Das Gehäuse 22 kann auch derart ausgebildet sein, dass es mehrere Rollen 28 bevorratet und/oder Stufen oder Mulden zu deren Lagesicherung aufweist. Im vorliegenden Ausführungsbeispiel weist das Gehäuse 22 eine schwenkbar mit dem übrigen Gehäuse 22 verbundene Klappe 23 auf, durch welche das Gehäuse 22 verschlossen werden kann. Die Klappe 23 ist mit einem Zwischenboden 25 versehen, welcher derart ausgebildet ist, dass er eine Auflage für eine weitere Rolle 28, welche als Vorrat in der Ballenpresse 10 mitgeführt werden kann, bildet. Die Klappe 23 kann manuell oder auch automatisch bzw. motorisiert, beispielsweise unter Zuhilfenahme eines Hydraulikzylinders, beispielsweise in Form eines Motors oder auch eines Dämpfers, in eine geöffnete Stellung gebracht werden, in der die Rolle 28 bequem durch eine Bedienungsperson entnommen bzw. geladen werden kann.

Das Vortriebselement bzw. die Mittel 24 sind auf ihrer Umfangsfläche mit einem Belag hohen Reibwerts versehen und können in Drehung versetzt werden. Die Drehung hilft anfänglich, die Hüllbahn 18 von der Rolle 28 abzuziehen und während des Umhüllungsvorgangs infolge einer gebremsten Drehbewegung in ihr eine Spannung aufzubauen. Die Rolle 28 kommt in ihrer Betriebsstellung mit einem Bereich, der etwa einer 4 bis 6 Uhr Stellung entspricht, an den Mitteln 24 zur Anlage.

Darüber hinaus weist die Vorrichtung 14 eine Leiteinrichtung 30 auf, welche die Hüllbahn 18 in Richtung eines Spaltes 32 zwischen benachbarten Riemen 20 führt.

Die Leiteinrichtung 30 ist in der Art eines flachen, sich zumindest über die gesamte Breite der Hüllbahn 18 erstreckenden, in Seitenbereichen geschlossenen Kanals 34 ausgebildet, welcher bis annähernd an den Spalt 32 heranreicht. Alternativ könnte auch nur unterhalb der Hüllbahn 18 eine Leiteinrichtung, beispielsweise in der Art eines Leitbleches vorgesehen sein.

An dem Kanal 34 können ein oder mehrere Gebläse vorgesehen sein, welche in den Kanal 34 Luft direkt oder über Rohre bzw. Leitungen einblasen, um die Hüllbahn 18 in Richtung des Ballens 16 zu fördern oder auch um einen Anhaften der Hüllbahn 18 an dem Kanal 34 entgegenzuwirken, insbesondere wenn die Hüllbahn 18 mit einem Klebstoff beschichtet oder selbstklebend bzw. adhäsiv ausgebildet ist, indem sie in dem Kanal 34 ein Luftpolster erzeugen, auf dem die Hüllbahn 18 schwebt.

Neben dieser Vorrichtung 14 weist die Ballenpresse 10 eine Aufnahmeeinrichtung 36 in der Art einer konventionellen Pick-up auf, welche geschnittenes Erntegut vom Boden aufnimmt und in einen Zufuhrkanal 38 einbringt. In dem Zufuhrkanal 38 ist ein Förderrotor mit Mitnehmern bzw. eine Pressgutzufuhreinrichtung 40 vorgesehen, welcher das von der Aufnahmeeinrichtung 36 zugeführte Erntegut in den Pressraum 12 einbringt.

Die Pressgutzufuhreinrichtung 40 wirkt darüber hinaus in bekannter Art und Weise mit einer Schneideinrichtung 42 zusammen, welche in dem Zufuhrkanal 38 oberhalb der Pressgutzufuhreinrichtung 40 vorgesehen ist, die aber auch unterhalb der Pressgutzufuhreinrichtung 40 bzw. anderweitig positioniert sein kann. Die Schneideinrichtung 42 weist eine Mehrzahl von Messern 44 auf, welche in den Förderbereich der Pressgutzufuhreinrichtung 40 hineinragen, um das Erntegut weiter zu zerkleinern.

In einem dem Pressraum 12 zugewandten, oberen Endbereich 46 des Zufuhrkanals 38 ist vertikal schwenkbar ein Leitmittel 48 vorgesehen, welches mit der von dem Kanal 34 herangeführten Hüllbahn 18 zusammenwirkt und das in der Art eines Rechens ausgeführt ist. Das Leitmittel 48 wird in der Figur in einer nach unten verschwenkten Betriebsstellung (durchgezogenen Linie) und einer Außer-Betriebsstellung (unterbrochene Linie) gezeigt.

Die von dem Kanal 34 kommende Hüllbahn 18 wird am Ende des Kanals 34 von dem Leitmittel 48 aufgenommen. Befindet sich das Leitmittel 48 in seiner abgesenkten Stellung, wird die Hüllbahn 18 durch die im gezeigten Ausführungsbeispiel oberschlächtig fördernde Pressgutzufuhreinrichtung 40 ergriffen und in den Pressraum 12 hinein gefördert, wo die Hüllbahn 18 wiederum durch den rotierenden Ballen 16 ergriffen wird, um diesen einzuhüllen.

Befindet sich das Leitmittel 48 hingegen in seiner oberen Außer-Betriebsstellung, in der es bzw. seine Zinken von der Pressgutzufuhreinrichtung 40 beabstandet sind, wird die Hüllbahn 18 nicht durch die Pressgutzufuhreinrichtung 40 ergriffen und somit nicht an den Ballen 12 herangeführt, weshalb kein Umhüllungsvorgang des Ballens 12 erfolgt.

Im Folgenden soll die Funktionsweise der Ballenpresse 10 bzw. der Vorrichtung 14 kurz zusammengefasst werden.

Mittels der Aufnahmevorrichtung 36 wird über den Zufuhrkanal 38 und die Pressgutzufuhreinrichtung 40 Erntegut in den Pressraum 12 der Ballenpresse 10 eingebracht, wo es durch die Riemen 20 in konventioneller Art und Weise zu einem Ballen 16 verdichtet wird. Nachdem Abschluss der Ballenbildung, wobei dieser Zeitpunkt beispielsweise durch einen oder mehrere die Ballengröße ermittelnde Sensoren, eine Zeitsteuerung, eine Durchflussmengenbestimmung etc. ermittelt werden kann, wird die Vorrichtung 14 aktiviert, um den Ballen 16 mit Hüllmaterial 18 zu umhüllen. Diese Aktivierung kann beispielsweise mittels einer nicht gezeigten Steuer- bzw. Regeleinheit, welche an der Ballenpresse 10 selbst oder an einem nicht gezeigten Zugfahrzeug, wie einem Ackerschlepper, vorgesehen sein kann, erfolgen. Um den Hüllvorgang zu beginnen, wird das Mittel 24 in Rotation versetzt, um Hüllmaterial von der Rolle 28 abzuziehen. Das Hüllmaterial 18 gelangt in den Kanal 34 und wird durch die Wirkung der Mittel 24 und falls vorhanden durch die oben beschriebene Gebläsewirkung in Richtung des Pressraums 12 bzw. des Ballens 16 gefördert. Darüber hinaus wird das Leitmittel 48, welches beispielsweise wirksam mit einem Elektromotor oder einem Hydraulikmotor verbunden ist, in seine in durchgezogener Linie dargestellte abgesenkte Stellung gebracht, in der es in die Pressgutzufuhreinrichtung 40 eingreift bzw. an diese angrenzt. Die Hüllbahn 18, welche aus dem Kanal 34 austritt und nun auf dem Leitmittel 48 aufliegt, wird durch die Pressgutzufuhreinrichtung 40 zwischen den benachbarten Riemen 20 in den Pressraum 12 eingebracht, wo sie durch den rotierenden Ballen 16 ergriffen wird und diesen einhüllt. Es kann vorteilhaft sein, die Aufnahmevorrichtung 36 während des Hüllvorgangs zu deaktivieren bzw. allgemein eine Zufuhr von Erntegut zu der Pressgutzufuhreinrichtung 40 zu unterbinden, um eine optimale Zufuhr des Hüllmaterial 18 zu gewährleisten.

Ist der Umhüllungsvorgang des Ballens 16 abgeschlossen, was durch konventionelle Sensoren oder auch eine Zeitsteuerung etc. bestimmt werden kann, wird die Hüllbahn 18 mittels einer an dem Kanal 34 schwenkbar angebrachten Trenneinrichtung 26 durchtrennt und das Leitmittel 48 wieder in seine angehobene Stellung (unterbrochene Linie) und somit das Hüllmaterial 18 außer Eingriff mit der Pressgutzufuhreinrichtung 40 gebracht, wodurch dem Pressraum 12 kein Hüllmaterial 18 mehr zugeführt wird.

Im Anschluss wird der fertige Ballen 16 aus der Ballenpresse 10 ausgestoßen.

Es wird hier darauf hingewiesen, dass die Verwendung des Leitmittels 48 bzw. insbesondere eines in der Art eines Rechens ausgebildeten Leitmittels 48 für die Erfindung nicht zwingend notwendig ist. Vielmehr kann insbesondere bei einer geeigneten Steuerung des Mittels 24 zum Abziehen von Hüllbahn von der Rolle 28 und/oder auch bei einer geeigneten Anordnung der Trenneinrichtung 26 ganz auf das Leitmittel 48 verzichtet werden.

In einer zweiten Ausführungsform wird die vorliegende Erfindung in Verbindung mit einer unterschlächtig fördernden Pressgutzufuhreinrichtung eingesetzt. Hierzu wird das Hüllmaterial der Pressgutzufuhreinrichtung in einem im Wesentlichen unterhalb der Presskammer 12 angeordneten Bereich zugeführt, um von diesem wie oben beschrieben erfasst und an den Ballen herangeführt zu werden, so dass das Hüllmaterial von dem Ballen ergriffen werden kann. Um das Hüllmaterial an den Pressgutzufuhreinrichtung in dieser Art heranzuführen, können beispielsweise ein oder mehrere Gebläse, beispielsweise in der im ersten Ausführungsbeispiel beschriebenen Art, verwendet werden. Es ist aber auch eine Verwendung mechanischer Zufuhrmittel, beispielsweise in der Art von in die Hüllbahn eingreifenden Zufuhrmitteln, wie weiteren Rotoren, Bandförderern etc. denkbar. Bei einer derartigen Ausführungsform ist es vorteilhaft, wenn die Öffnung, über die die Hüllbahn zu der Pressgutzufuhreinrichtung gelangt, während der eigentlichen Ballenbildung zumindest im Wesentlichen verschlossen ist, um einem Eindringen von Erntegut entgegenzuwirken.

## Patentansprüche

1. Ballenpresse (10) mit einem Pressraum (12), einer Pressgutzufuhreinrichtung (40), welche Pressgut in den Pressraum (12) hinein fördern kann, und einer Vorrichtung zum Umhüllen eines Ballens (16) mit einer Hüllbahn (18), welche Mittel (24) aufweist, die die Hüllbahn (18) von einem Vorrat, beispielsweise in der Art einer Rolle (28), abziehen, **dadurch gekennzeichnet, dass** die Vorrichtung (14) die Hüllbahn (18) derart an die Pressgutzufuhreinrichtung (40) heranbringen kann, dass sie durch die Pressgutzufuhreinrichtung (40) ergriffen und in Richtung des Ballens (16) gefördert wird.

2. Ballenpresse nach Anspruch 1, **dadurch gekennzeichnet, dass** die Pressgutzufuhreinrichtung (40) als ein vorzugsweise Mitnehmer aufweisender Förderrotor ausgebildet ist bzw. einen solchen umfasst.

3. Ballenpresse nach Anspruch 1 oder 2, **gekennzeichnet durch** eine sich vorzugsweise zumindest im Wesentlichen von den Mitteln (24) bis an die Pressgutzufuhreinrichtung (40) erstreckende Leiteinrichtung, welche beispielsweise in der Art eines Kanals (34) und/oder einer Leitfläche ausgebildet ist.

4. Ballenpresse nach Anspruch 3, **dadurch gekennzeichnet, dass** sich die Leiteinrichtung zumindest im Wesentlichen über die gesamte Breite der Hüllbahn (18) erstreckt.

5. Ballenpresse nach einem oder mehreren der vorherigen Ansprüche, **gekennzeichnet durch** wenigstens ein Gebläse, welches vorzugsweise mit der Leiteinrichtung zusammenwirkt.

6. Ballenpresse nach Anspruch 5, **dadurch gekennzeichnet, dass** das Gebläse einen Luftstrom direkt oder indirekt in den Kanal (34) einbringt, wobei der Luftstrom beispielsweise zumindest im Wesentlichen über die gesamte Breite des Kanals (34) in diesen und/oder bereichsweise bzw. punktuell eingeleitet wird.

7. Ballenpresse nach einem oder mehreren der vorherigen Ansprüche, **gekennzeichnet durch** eine Trenneinrichtung (26), welche vorzugsweise mit der Leiteinrichtung zusammenwirkt.

8. Ballenpresse nach einem oder mehreren der vorherigen Ansprüche, **dadurch gekennzeichnet, dass** die Pressgutzufuhreinrichtung (40) mit einer Schneideinrichtung (42) zusammenwirkt.

9. Ballenpresse nach einem oder mehreren der vorherigen Ansprüche, **dadurch gekennzeichnet, dass** Pressgutzufuhreinrichtung (40) an den Pressraum (12) angrenzend angeordnet ist.

10. Ballenpresse nach einem oder mehreren der vorherigen Ansprüche, **dadurch gekennzeichnet, dass** die Pressgutzufuhreinrichtung (40) einer Aufnahmeeinrichtung (38) der Ballenpresse (10) nachgeordnet ist.

11. Ballenpresse nach einem oder mehreren der vorherigen Ansprüche, **gekennzeichnet durch** wenigstens ein Leitmittel (48), welches die Hüllbahn (18) selektiv an die Pressgutzufuhreinrichtung (40) heranbringt.

12. Ballenpresse nach Anspruch 11, **dadurch gekennzeichnet, dass** das Leitmittel (48) rechenartig ausgebildet ist.

13. Ballenpresse nach Anspruch 11 oder 12, **dadurch gekennzeichnet, dass** das Leitmittel (48) an einem der Presskammer (12) zugewandten Endbereich eines Zufuhrkanals (38) der Ballenpresse (10) vorgesehen ist bzw. mit diesem direkt oder indirekt verbunden ist.

14. Ballenpresse nach einem oder mehreren der Ansprüche 11 bis 13, **dadurch gekennzeichnet, dass** das Leitmittel (48) zumindest eine erste, an die Pressgutzufuhreinrichtung (40) angrenzende bzw. in diesen eingreifende, und eine zweite von der Pressgutzufuhreinrichtung (40) beabstandete Stellung einnehmen kann, zwischen denen es vorzugsweise verschwenkt werden kann.

15. Ballenpresse nach einem oder mehreren der vorherigen Ansprüche, **dadurch gekennzeichnet, dass** die Pressgutzufuhreinrichtung (40) ober- bzw. unterschlächtig fördert.

16. Ballenpresse nach einem oder mehreren der vorherigen Ansprüche ausgebildet in der Art einer Rundballenpresse.
